# EUROPÄISCHE PATENTANMELDUNG

(11) **EP 1 447 610 A1**
(43) Veröffentlichungstag der Anmeldung: **18.08.2004**
(21) Anmeldenummer: 03003383.1
(22) Anmeldetag: 14.02.2003
(51) Int. Cl.: F16L 55/16, F16L 55/165

(54) **Verfahren zur Ausbildung einer Innenauskleidung in einem Kanal und Hüllschlauch mit darin angeordnetem Auskleidungsschlauch**

(71) Anmelder: RS Technik AG, 8627 Grüningen (CH); In Tec, 20090 Segrate (IT)
(72) Erfinder: Criffo, Franco, 20090 Segrate (MI) (IT)
(74) Vertreter: Patentanwälte Schaad, Balass, Menzl & Partner AG

(57) **Zusammenfassung**

Die Erfindung beizieht sich auf ein Verfahren zur Ausbildung einer Innenauskleidung mit einem mit aushärtbarem Kunstharz imprägnierten Auskleidungsschlauch (6) in einem Kanal mit einem Hauptrohr (2) und mindestens einem Seitenrohr (4). Beim erfindungsgemässen Verfahren wird in einem ersten Schritt ein mit aushärtbarem Kunstharz imprägnierter Auskleidungsschlauch (6) mit einem Hauptarm (8) und mindestens einem Seitenarm (10) bereitgestellt. Der Auskleidungsschlauch (6) wird in einem zweiten Schritt durch Umstülpen des Hauptarmes (8) in einen Hüllschlauch (12) eingebracht, wonach der Hüllschlauch (12) in einem dritten Schritt an der der Abzweigungsstelle (9) des Seitenarmes (10) des Auskleidungsschlauches (6) entsprechenden Stelle geschwächt oder geöffnet wird.

## Beschreibung

Die Erfindung betrifft ein Verfahren zur Ausbildung einer Innenauskleidung mit einem mit aushärtbarem Kunstharz imprägnierten Auskleidungsschlauch in einem Kanal gemäss Anspruch 1 und einen Hüllschlauch mit einem darin angeordneten Auskleidungsschlauch gemäss Anspruch 11.

Verfahren zur Ausbildung einer Innenauskleidung werden zur Sanierung schadhafter Kanalrohre, beispielsweise Abwasserrohrleitungen, verwendet.

Aus Stein, D., Niederehe W., "Instandhaltung von Kanalisationen", 2., überarbeitete und erweiterte Auflage, Verlag Ernst & Sohn, Berlin, ist bekannt, zur Sanierung eines schadhaften Kanalrohres eine Innenauskleidung (sogenannter "Inliner") zu verwenden, die in Form eines konfektionierten kunstharzgetränkten Trägermaterials in Schlauchform in das zu sanierende Kanalrohr eingebracht wird. Besagtes Trägermaterial wird unter Druck an die Innenwand des Kanalrohres angepresst, wo es bei Umgebungstemperatur, durch Wärmezufuhr oder UV-Licht aushärtet.

GB-A-1449455 beschreibt die Bildung eines rigiden Auskleidungsrohres, wobei ein schlauchförmiges Laminat, welches ein mit Kunstharz imprägniertes, absorbierendes Material enthält, in einen Kanal hineingestülpt wird. Dabei wird mittels Wasser ein Druck erzeugt, so dass der Schlauch unter Umstülpung sowohl im Kanal vorwärtsbewegt als auch unter Ausnutzung seiner Dehnfähigkeit an die Innenwand des Kanals angepresst wird. Nach der Umstülpung befindet sich das Kunstharz auf der Aussenseite des Schlauches.

US-A-5597353 beschreibt eine Vorrichtung zum Umstülpen eines Schlauches unter Verwendung eines Fluiddruckes.

WO-A-9116568 offenbart die Auskleidung eines seitlichen Kanalrohres, welches in das Hauptkanalrohr mündet.

Im Bereich von Abzweigungsstellen von Seitenrohren eines Kanals muss gemäss den konventionellen Verfahren die Innenauskleidung nach deren Bildung so aufgeschnitten werden, dass das Seitenrohr mit dem Hauptrohr strömungstechnisch wieder verbunden ist. Dies geschieht mittels speziell entwickelter, robotergesteuerter Bohr- und Fräsgeräte, welche mittels einer Kamera positioniert werden können.

Nach dem Aufbohren liegt ein Hauptrohr mit einer Innenauskleidung und ein Seitenrohr ohne Innenauskleidung vor. Bei den bekannten Verfahren muss deshalb in weiteren Schritten jedes Seitenrohr einzeln gemäss dem oben beschriebenen Verfahren ausgekleidet werden. Dies bringt einen beträchtlichen Arbeitsaufwand mit sich und ist äusserst zeitaufwändig, da mit der Auskleidung der Seitenrohre erst begonnen werden kann, wenn die Innenauskleidung des Hauptrohres ausgehärtet ist.

Zudem sind die oben erwähnten Bohr- oder Fräsgeräte üblicherweise nicht in der Lage, in vertikal oder sehr steil verlaufenden Hauptrohren die Innenauskleidung im Bereich der Mündungsstellen des Seitenrohres aufzuschneiden. Mittels dieser Geräte ist es nur sehr schwierig oder in gewissen Fällen gar nicht möglich, die Innenauskleidung an T- und X-förmigen Abzweigungen aufzuschneiden. Als weiterer Nachteil kommt hinzu, dass die Geräte in der Anschaffung teuer sind.

Da die Innenauskleidung nicht in jedem Fall vollständig mit der Rohrwand verbunden ist, tritt im aufgebohrten Bereich oft Korrosion und Umläufigkeit auf. Aufgebohrte Bereiche werden deshalb oft mittels eines ferngesteuerten Einbaus einer Dichtungsmanschette aus epoxidgetränktem Gewebe abgedichtet, was technisch äusserst aufwändig ist.

Ziel der vorliegende Erfindung ist es, ein Verfahren, welches es erlaubt, sowohl das Hauptrohr als auch das mindestens eine Seitenrohr eines Kanals in einem Arbeitsschritt auszukleiden, und einen dazu geeigneten Hüllschlauch mit einem darin angeordneten Auskleidungsschlauch zur Verfügung zu stellen.

Diese Aufgabe wird erfindungsgemäss gelöst durch ein Verfahren gemäss Anspruch 1 und weiter mit einem Hüllschlauch (sogenannter "Pre-Liner") mit einem darin angeordneten Auskleidungsschlauch (sogenannter "Liner") gemäss Anspruch 11.

Gemäss dem Verfahren der vorliegenden Erfindung können sowohl das Hauptrohr als auch die Seitenrohre eines Kanals in einfacher Weise in einem einzigen Arbeitsschritt ausgekleidet werden. Die Aushärtung des Kunstharzes in Haupt- und Seitenrohr findet im wesentlichen gleichzeitig statt. Der zeitliche Aufwand zur Auskleidung eines verzweigten Kanalsystems wird somit erheblich herabgesetzt.

Gleichzeitig kann auf die Verwendung von Bohr- und Fräsgeräte verzichtet werden. Die hohen Kosten, die beim Erwerb solcher Geräte anfallen, fallen somit weg. Da gemäss dem Verfahren der vorliegenden Erfindung die Innenauskleidung an den Mündungsstellen der Seitenrohre nicht aufgebohrt werden müssen, fallen auch die technisch aufwändigen Verfahren zur Abdichtung jener Stellen im Rohr weg, die dem aufgebohrten Bereich benachbart sind.

Gemäss dem Verfahren der vorliegenden Erfindung können auch Kanäle mit einem vertikal oder sehr steil verlaufenden Hauptrohr und horizontal davon abgehenden Seitenrohren ausgekleidet werden. Ebenso ist gemäss dem erfindungsgemässen Verfahren die Auskleidung von Kanalsystemen mit T-förmigen Abzweigungen oder X-förmigen Abzweigungen problemlos möglich.

In einer bevorzugten Ausführungsform der Erfindung wird ein Auskleidungsschlauch bereitgestellt, dessen Seitenarm mit dem Hauptarm über eine Sollbruchstelle verbunden ist. Eine Sollbruchstelle kann beispielsweise von einem Band mit definierter kleiner Reissfestigkeit oder einem leicht lösbaren Klebeband gebildet werden. Dadurch wird erreicht, dass beim Einbringen in den Hüllschlauch der Seitenarm am Hauptarm des Auskleidungsschlauches anliegt. Dies gewährleistet, dass beim Einbringen in den Hüllschlauch keine Bereiche der Seitenarme umgestülpt werden. Durch das Verbinden der Seitenarme mit dem Hauptarm wird zudem eine beim Einstülpen in den Hüllschlauch unerwünschte Faltenbildung innerhalb der Seitenarme vermieden, die zu einer ungleichmässigen Verteilung des Kunstharzes führen könnte.

In einer weiteren bevorzugten Ausführungsform ist der Hüllschlauch transparent, so dass die Abzweigungsstelle des Seitenarmes des Auskleidungsschlauches durch den Hüllschlauch hindurch sichtbar ist. In einer solchen Ausführungsform werden die den Abzweigungsstellen des Auskleidungsschlauches entsprechenden Stellen des Hüllschlauches, welche nachfolgend geöffnet werden, einfach aufgefunden. Die Verwendung eines Polyethylenschlauches als Hüllschlauch ist besonders bevorzugt.

In einer weiteren bevorzugten Ausführungsform wird der Auskleidungsschlauch im Hüllschlauch entlüftet, bevor er in das Hauptrohr eingebracht wird. Mittels dieser Massnahme kann der im Hüllschlauch angeordnete Auskleidungsschlauch in eine kompakte Form gebracht werden, was das Einbringen in das Hauptrohr des Kanals vereinfacht. Vorzugsweise wird der Hüllschlauches mit dem darin angeordneten Auskleidungsschlauch mittels eines Zugseiles in das Hauptrohr des Kanals eingebracht.

In einer weiteren bevorzugten Ausführungsform des Verfahrens erfolgt die Positionierung des Hüllschlauches mit dem darin angeordneten Auskleidungsschlauch mit Hilfe einer Kamera, die in das Seitenrohr eingebracht ist. Das Einbringen einer Kamera im Seitenrohr erlaubt es, die Position des Hüllschlauches permanent zu überwachen. Die Position des Hüllschlauches wird solange geändert, bis die Abzweigungsstelle des Seitenarmes des Auskleidungsschlauches im Bereich der Mündungsstelle des Seitenrohres zu liegen kommt. Vorzugsweise wird die Abzweigungsstelle des Seitenarmes des Auskleidungsschlauches deshalb zur besseren Visualisierung beispielsweise mit Farbe markiert. Weiter ist denkbar, eine parallel zur Achse des Hauptarmes des Auskleidungsschlauches verlaufende Markierungslinie auf dem Hüllschlauch anzubringen, auf welcher die geöffnete Stelle des Hüllschlauches liegt. Auf diese Weise kann mit der Kamera vorerst die erwünschte Drehlage des Schlauches ermittelt werden, bevor der Hüllschlauch weiter positioniert wird.

Wird ein Kanal ausgekleidet, in welchem Haupt- und Seitenrohre bis zu den jeweiligen Enden der Innenauskleidung zugänglich sind, so wird bevorzugt ein Auskleidungsschlauch bereitgestellt, dessen Hauptarm an einem Ende geöffnet ist und dessen übrige Enden blind sind. Nach erfolgter Auskleidung können die blinden Enden leicht geöffnet werden.

Wird ein Kanal ausgekleidet, in welchem mindestens ein Rohr nicht bis zum jeweiligen Ende der Innenauskleidung zugänglich ist, so wird ein Auskleidungsschlauch bereitgestellt, der an diesem Ende geöffnet ist. Besagter Auskleidungsschlauch wird vor dem Einbringen in den Hüllschlauch in einen im wesentlichen die Form des Auskleidungsschlauches aufweisenden Stützschlauch eingebracht, der an den den offenen Enden des Auskleidungsschlauches entsprechenden Enden geschlossen ist. Nach dem Einstülpen liegt ein Hüllschlauch mit einem darin angeordneten Auskleidungsschlauch vor, wobei der Auskleidungsschlauch auf der dem Hüllschlauch abgewandten Seite von einem Stützschlauch umgeben ist. Der Stützschlauch hat die Funktion, dass Druck aufgebaut werden kann, indem durch die eine Öffnung des Stützschlauches beispielsweise Luft oder Wasser eingebracht wird. Die Innenfläche des Auskleidungsschlauches wird somit mit Druck beaufschlagt, so dass der Hüllschlauch mit dem darin angeordneten Auskleidungsschlauch an die Innenwand des Hauptrohres angepresst wird und der Seitenarm des Auskleidungsschlauches in das Seitenrohr eingestülpt wird. Vorzugsweise stehen die Enden des Stützschlauches über die jeweiligen Enden des Auskleidungsschlauches vor. Dadurch werden die offenen Enden des Auskleidungsschlauches fest an die Innenwand des Kanalrohres angedrückt.

Die Erfindung wird anhand der Zeichnungen näher erläutert.

Es zeigen rein schematisch:
- Fig. 1: im Querschnitt einen Teil eines Kanals mit einem gebogenen Hauptarm und zwei davon abgehenden Seitenarmen;
- Fig. 2: in der Seitenansicht einen Teil eines Auskleidungsschlauches, der im wesentlichen die Form des in Fig. 1 dargestellten Kanals aufweist;
- Fig. 3: einen Teil eines Hüllschlauches in der Seitenansicht beim Einbringen des im Längsschnitt dargestellten Auskleidungsschlauches in den Hüllschlauch unter Umstülpung des Hauptarmes;
- Fig. 4: in der Ansicht in Richtung des Pfeiles IV der Fig. 3 den dort dargestellten Hüllschlauch mit dem teilweise umgestülpten Auskleidungsschlauch;
- Fig. 5: den in Fig. 1 gezeigten Teil des Kanals im Längsschnitt beim Einziehen des in Seitenansicht gezeigten Hüllschlauches mit dem darin angeordneten Auskleidungsschlauch in das Hauptrohr;
- Fig. 6: im Längsschnitt den in Fig. 1 dargestellten Kanal mit dem im Hüllschlauch angeordneten Auskleidungsschlauch während des Umstülpens der Seitenarme in die Seitenrohre;
- Fig. 7: im Längsschnitt einen Teil eines T-förmigen Kanals;
- Fig. 8: in der Seitenansicht einen Teil eines Auskleidungsschlauches zur Innenauskleidung des in Fig. 7 dargestellten Teils eines Kanals;
- Fig. 9: eine weitere Darstellung des in Fig. 8 dargestellten Teils eines Auskleidungsschlauches mit am Hauptarm angelegtem Seitenarm;
- Fig. 10: im Längsschnitt einen Hüllschlauch beim Einbringen des Auskleidungsschlauches gemäss Fig. 9 in den Hüllschlauch unter Umstülpung des Hauptarmes;
- Fig. 11: den in Fig. 7 gezeigten Teil eines Kanals im Längsschnitt mit dem darin eingebrachten Hüllschlauch und dem im Hüllschlauch angeordneten Auskleidungsschlauch in Seitenansicht; und
- Fig. 12: den in Fig. 7 dargestellten Teil eines Kanals mit einer Innenauskleidung.

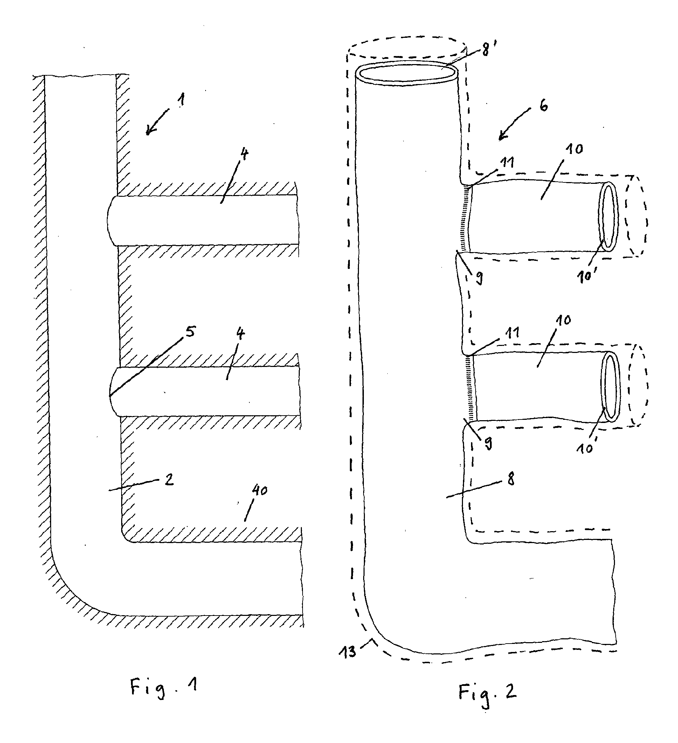

Der in Fig. 1 abgebildete Teil eines Kanals 1 weist ein Hauptrohr 2 auf, welches um ca. 90° gebogen ist und im vertikalen Bereich zwei an je einer Mündungsstelle 5 waagrecht abgehende, gerade Seitenrohre 4 aufweist. Der Kanal 1 führt durch eine Umgebung 40, beispielsweise durch Beton oder Erde, durch eine Hauswand oder einen Boden eines Gebäudes.

Der in Fig. 2 dargestellte Auskleidungsschlauch 6 entspricht in seiner äusseren Form im wesentlichen dem in Fig. 1 dargestellten Kanal. Der Auskleidungsschlauch 6 weist einen um ca. 90° gebogenen Hauptarm 8 und zwei vom Hauptarm 8 rechtwinklig abgehende Seitenarme 10 auf. Die Enden der Seitenarme 10' sowie das abgebildete Ende 8' des Hauptarmes 8 sind in Fig. 2 offen. An den Abzweigungsstellen 9 der Seitenarme 10 sind zudem Nähte 11 eingezeichnet, welche bei der Herstellung des Auskleidungsschlauches 6 beim Zusammenfügen der geradlinig gewobenen Teile des Auskleidungsschlauches 6 entstehen. Beim Auskleidungsschlauch handelt es sich vorzugsweise um "Flex-Liner", wie er beispielsweise bei der Firma IN·TEC bezogen werden kann.

Ein Stützschlauch 13 (gestrichelte Linie) wird mindestens dann benötigt, wenn der Auskleidungsschlauch an einem im Kanal nicht oder nur schwer zugänglichen Ende offen sein muss. Der Stützschlauch 13 weist im wesentlichen die Form des Auskleidungsschlauches 6 auf und ist mindestens an den den nicht zugänglichen, offenen Enden des Auskleidungsschlauches 6 entsprechenden Enden geschlossen und ragt über diese Enden hinaus.

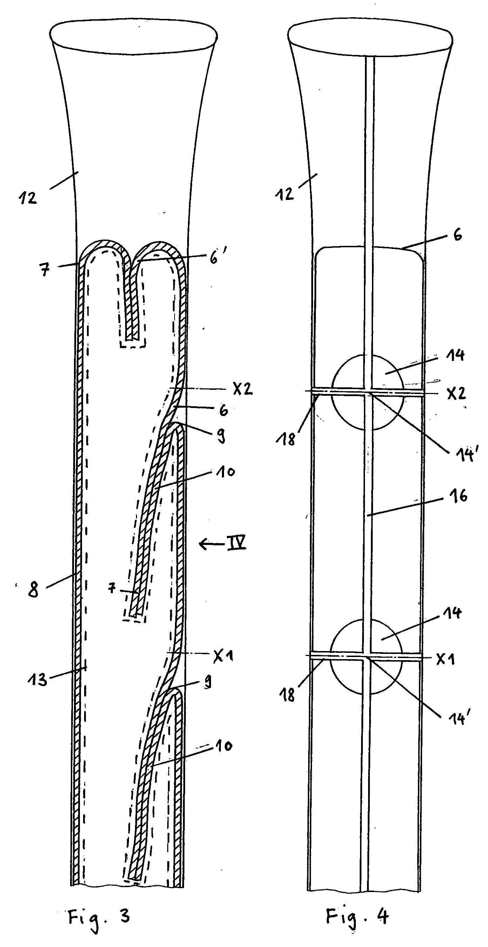

Fig. 3 zeigt einen Hüllschlauch 12 beim Einbringen des Auskleidungsschlauches 6. Ein Hüllschlauch wird auch "Preliner" bezeichnet. Wird der Auskleidungsschlauch 6 gemäss dem erfindungsgemässen Verfahren unter Umstülpung des Hauptarmes 8 in den Hüllschlauch 12 eingebracht, so stülpt sich die imprägnierte Wandfläche 7 des Hauptarmes 8 nach aussen, so dass sie unmittelbar auf der Innenseite des Hüllschlauches 12 zu liegen kommt. Die Seitenarme 10 des Auskleidungsschlauches 6, die beim Einbringen in den Hüllschlauch 12 nicht umgestülpt werden, ragen in das Innere des umgestülpten Hauptarmes 8. Fig. 3 zeigt einen Hauptarm 8, der in seinem in Umstülprichtung vorderen Endbereich 6' noch nicht vollständig umgestülpt ist. In den Seitenarmen 10 und dem vorderen noch nicht vollständig umgestülpten Endbereich 6' des Auskleidungsschlauches 6 liegen die mit Kunstharz, beispielsweise mit Epoxid-, Polyester-, Vinylesterharz imprägnierten Wandflächen 7 unmittelbar aneinander. Im Bereich der Abzweigungsstellen 9 der Seitenarme 10 ist es möglich, dass der Auskleidungsschlauch 6 nicht am Hüllschlauch 12 anliegt. In Höhe X1, X2 befinden sich jene Stellen am Hüllschlauch 12, die den Abzweigungsstellen 9 des Auskleidungsschlauches 6 entsprechen. Besagte Stellen können insbesondere dann leicht ausgemacht werden, wenn der Hüllschlauch transparent ist.

In Ausführungsformen des erfindungsgemässen Verfahrens, in denen Auskleidungsschläuche mit mehr als einem offenen Ende verwendet werden, wird der Auskleidungsschlauches auf der dem Hüllschlauch abgewandten Seite von einem Stützschlauch 13 (gestrichelte Linie) umgeben.

Fig. 4 zeigt den in Fig. 3 dargestellten Hüllschlauch 12 mit dem darin angeordneten Auskleidungsschlauch 6 in der Ansicht in Richtung des Pfeiles IV der Fig. 3. Der Hüllschlauch 12 wird an der der Abzweigungsstelle des Seitenarmes entsprechenden Stelle geschwächt oder geöffnet. Dabei werden im Hüllschlauch 12 beispielsweise kreisförmige Durchbruchstellen 14 durch Aufschneiden oder Perforieren angebracht, deren Mittelpunkt auf der Höhe X1, X2 liegen. Auch denkbar ist beispielsweise das Anbringen von zwei sich im wesentlichen rechtwinklig schneidenden Schnitten als Durchbruchstelle. Zusätzlich wird mit Vorteil die der Abzweigung der Seitenarme entsprechende Stelle markiert. Eine parallel zur Längsachse des Hüllschlauches verlaufende Markierungslinie 16 schneidet je eine senkrecht dazu verlaufende, mittels Farbe angebrachte Markierungslinie 18 im Mittelpunkt 14' der Durchbruchstelle 14. Stellt die Durchbruchstelle 14 eine geschwächte Stelle dar, so verlaufen die Markierungslinie 16, 18 durchgehend auf dem Hüllschlauch 12. Ist die Durchbruchstelle 14 offen, so verlaufen die Markierungslinien 16, 18 im Bereich der Durchbruchstelle mindestens auf dem Auskleidungsschlauch 6. Mit Vorteil dehnt sich die in Längsrichtung verlaufende Markierungslinie über einen längeren Bereich aus, was eine frühzeitige Feststellung der Drehlage mittels einer in das Seitenrohr eingebrachten Kamera erlaubt.

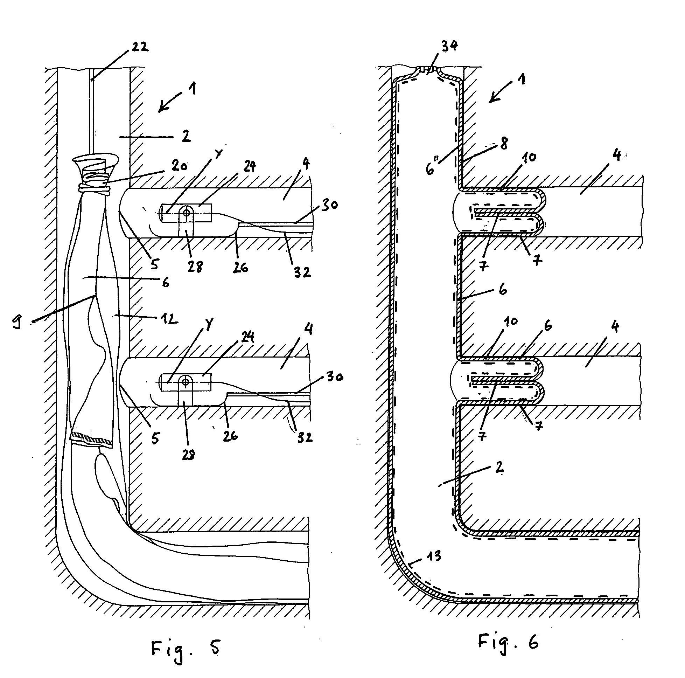

Fig. 5 zeigt den in Fig. 1 abgebildeten Teil eines Kanals 1 beim Einziehen des Hüllschlauches 12 mit dem darin angeordneten Auskleidungsschlauch 6 in das Hauptrohr 2. Hüllschlauch 12 und Auskleidungsschlauch 6 sind im Endbereich 20 an einem Zugseil 22 festgebunden, mittels welchem der Hüllschlauch 12 mit dem Auskleidungsschlauch 6 in den Hauptarm 2 des Kanals 1 eingezogen wird. Indem beispielsweise das Zugseil 22 und der Hüllschlauch 12 vorwärts- und rückwärtsbewegt und gleichzeitig gedreht werden, kann die Abzweigungsstelle 9 des Auskleidungsschlauches 6 derart positioniert werden, dass sie im Bereich der Mündungsstelle 5 des Seitenrohres 4 zu liegen kommt. Zur Überprüfung der Positionierung wird in den Seitenrohren 4 je eine Kamera 24 eingebracht. Die Kamera 24 ist an einem Schlitten 26 über ein daran angebrachtes Verbindungsstück 28 derart montiert, dass ihre Achse Y parallel zum Seitenrohr 4 verläuft. Der Schlitten 26 wird beispielsweise mittels eines daran montierten Stabes 30 im Seitenrohr 4 an die gewünschte Stelle gebracht. Denkbar ist auch, dass die Kamera an ein selbstfahrendes Roboterfahrzeug angebracht wird und auf diese Weise an die gewünschte Stelle gebracht wird. Die Kamera 24 ist weiter mit einem Kabel 32 verbunden, mittels dem beispielsweise die Stromzufuhr oder die Bildübertragung gewährleistet wird.

Fig. 6 zeigt im Querschnitt den in Fig. 1 dargestellten Kanal 1 mit Hüllschlauch (nicht gezeigt) und Auskleidungsschlauch 6 bei der Beaufschlagung der Innenwand des Auskleidungsschlauches 6 mit Druck. Durch die Öffnung 34 im Auskleidungsschlauch 6 wird die Innenfläche 6" des Auskleidungsschlauches 6 mit Druck beaufschlagt, indem z.B. Luft oder Wasser in den Auskleidungsschlauch 6 gepumpt wird. Dabei wird der Hüllschlauch 12 und der Auskleidungsschlauch 6 an die Innenwand des Hauptrohres 2 angepresst. Durch weiteres Beaufschlagen mit Druck werden dann die Seitenarme 10 durch die Durchbruchstellen im Hüllschlauch (nicht gezeigt) hindurch unter Inversion in das jeweilige Seitenrohr 4 hineingestülpt, unter Umständen mit Hilfe eines Stützschlauches 13 (gestrichelte Linie). Nach erfolgter Auskleidung wird der Druck belassen, bis das Kunstharz mindestens teilweise ausgehärtet ist.

Im umgestülpten Bereich der Seitenarme 10 liegt die mit Kunstharz imprägnierte Wandfläche 7 des Auskleidungsschlauches dabei unmittelbar auf der Innenwand des Seitenrohres 10 an, während im noch nicht umgestülpten Bereich die mit Kunstharz imprägnierten Wandflächen 7 aneinander liegen. Nach dem Aushärten des Kunstharzes entsteht eine Innenauskleidung, welche im Hauptrohr aus dem Hauptarm 8 und einem zwischen der Innenwand des Hauptrohres 2 und dem Hauptarm 8 liegenden Hüllschlauch (nicht gezeigt) besteht, und im Seitenrohr 4 aus einem Seitenarm 10, welcher unmittelbar auf der Innenwand des Seitenrohres 4 anliegt.

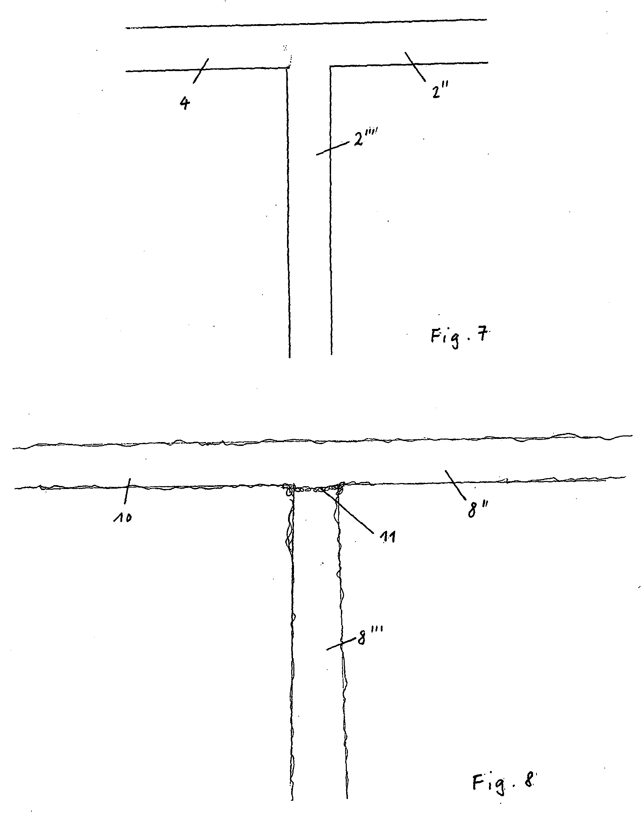

In Fig. 7 ist ein T-förmiger Teil eines Kanals dargestellt. Dieser auch als "T-Rohr" bezeichnete Teil beinhaltet ein Hauptrohr 2, welches zwei rechtwinklig zueinanderstehende Abschnitte (2'; 2") umfasst, und ein Seitenrohr 4. Das Seitenrohr 4 schliesst an den Abschnitt 2" an und mündet rechtwinklig zum Abschnitt 2''' in das Hauptrohr 2.

Fig. 8 zeigt eine Innenauskleidung für den in Fig. 7 abgebildeten Teil eines Kanals. Entsprechend zum horizontalen und zum vertikalen Hauptrohr umfasst der Hauptarm 8 des Auskleidungsschlauches 6 zwei rechtwinklig zueinander stehende Abschnitte (8" ; 8'''). Anschliessend an den Abschnitt 8'' und rechtwinklig zu Abschnitt 8''' des Hauptarmes 8 zweigt ein Seitenarm 10 ab. Der Abschnitt 8''' ist mit dem aus Abschnitt 8" und Seitenarm 10 bestehenden Teil des Auskleidungsschlauches 6 über eine Naht 11 verbunden. Ein solcher Auskleidungsschlauch wird als "T-Liner" bezeichnet.

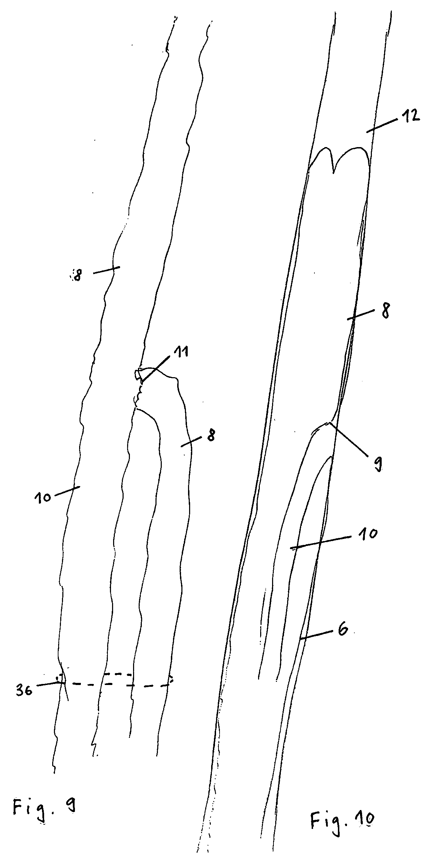

In Fig. 9 ist der Seitenarm 10 des in Fig. 8 dargestellten Auskleidungsschlauches 6 an den Hauptarm 10 angelegt. Wie mittels gestrichelter Linie angedeutet, kann der Hauptarm 8 mit dem Seitenarm 10 über eine Sollbruchstelle 36 wie beispielsweise einem Band mit definierter kleiner Reissfestigkeit oder einem leicht lösbaren Klebeband verbunden werden.

Der in Fig. 8 und 9 abgebildete Auskleidungsschlauch wird in einen Hüllschlauch 12 eingebracht, wie aus Fig. 10 ersichtlich ist. Das Einbringen geschieht unter Umstülpung des Hauptarmes 8. Die Seitenarme 10 des Auskleidungsschlauches 6, die beim Einbringen in den Hüllschlauch 12 nicht umgestülpt werden, ragen in das Innere des umgestülpten Hauptarmes 8. Der Hüllschlauch 12 wird an der der Abzweigungsstelle des Seitenarmes entsprechenden Stelle geschwächt oder geöffnet. Dabei werden im Hüllschlauch 12 Durchbruchstellen beispielsweise durch Aufschneiden oder Perforieren angebracht.

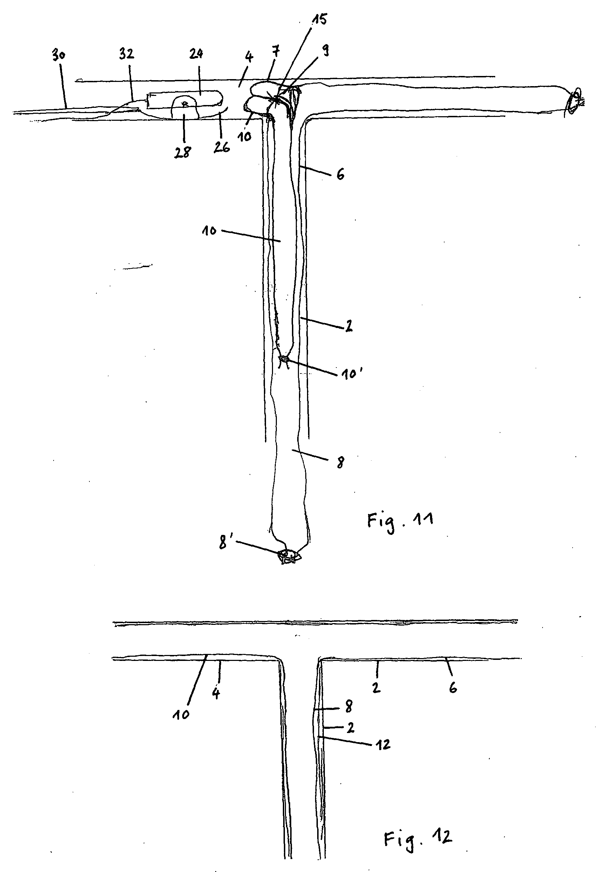

Fig. 11 zeigt den in Fig. 7 abgebildeten Teil eines Kanals mit einem Hüllschlauch 12 (nicht gezeigt) und einem Auskleidungsschlauch 6 während des Einstülpens des Auskleidungsschlauches 6 in das Seitenrohr 4. Das Ende des Seitenarmes 10' und das Ende des eingestülpten Hauptarmes 8' sind geschlossen. Hüllschlauch und Auskleidungsschlauch 6 werden in das Hauptrohr 2 des Kanals mittels eines Zugseiles (nicht gezeigt) eingezogen, bis die Abzweigungsstelle 9 des Seitenarmes 10, welche mit einer Markierung 15 versehen ist, an die Mündungsstelle des Seitenrohres 4 zu liegen kommt. Zur Überprüfung der Positionierung wird im Seitenrohr 4 eine Kamera 24 eingebracht. Die Kamera 24 ist an einem Schlitten 26 über ein daran angebrachtes Verbindungsstück 28 montiert. Der Schlitten 26 wird über einen daran montierten Stab 30 im Seitenrohr 4 an die gewünschte Stelle gebracht. An die Kamera 24 ist weiter ein Kabel 32 angebracht. Bevor der Seitenarm 10 in das Seitenrohr 4 eingestülpt wird, wird die Kamera 24 zurückgezogen.

Wird die Innenwand des Auskleidungsschlauches nach dem Anpressen des Hauptarmes an die Innenwand des Hauptrohres weiter mit Druck beaufschlagt, stülpt der Seitenarm 10 durch die Durchbruchstelle im Hüllschlauch (nicht gezeigt) hindurch unter Inversion in das jeweilige Seitenrohr 4 ein. Im umgestülpten Bereich der Seitenarme 10 liegt die mit Kunstharz imprägnierte Wandfläche 7 des Auskleidungsschlauches 6 dabei unmittelbar auf der Innenwand des Seitenrohres 4 an. Nach erfolgter Auskleidung wird der Druck belassen, bis das Kunstharz mindestens teilweise ausgehärtet ist.

Der mit der Innenauskleidung ausgekleidete Kanal ist in Fig. 12 widergegeben. Dabei ist das Hauptrohr 2 und das Seitenrohr 4 ausgekleidet. Im Seitenrohr 4 liegt die mit Kunstharz imprägnierte Wandfläche des Seitenarmes 10 unmittelbar auf der Innenwand des Seitenrohres 4, während im Hauptrohr 2 ein Hüllschlauch 12 zwischen der Rohr-Innenwand und der mit Kunststoff imprägnierten Wandfläche des Hauptarmes 8 des Auskleidungsschlauches 6 liegt.

## Patentansprüche

1. Verfahren zur Ausbildung einer Innenauskleidung mit einem mit aushärtbarem Kunstharz imprägnierten Auskleidungsschlauch (6) in einem Kanal mit einem Hauptrohr (2) und mindestens einem Seitenrohr (4), bei dem
a) ein mit aushärtbarem Kunstharz imprägnierter Auskleidungsschlauch (6) mit einem Hauptarm (8) und mindestens einem Seitenarm (10) bereitgestellt wird,
b) der Auskleidungsschlauch (6) durch Umstülpen des Hauptarmes (8) in einen Hüllschlauch (12) eingebracht wird,
c) der Hüllschlauch (12) an der der Abzweigungsstelle (9) des Seitenarmes (10) des Auskleidungsschlauches (6) entsprechenden Stelle geschwächt oder geöffnet wird,
d) der Hüllschlauch (12) mit dem darin angeordneten Auskleidungsschlauch (6) in das Hauptrohr (2) eingebracht und derart positioniert wird, dass die Abzweigungsstelle (9) des Seitenarmes (10) des Auskleidungsschlauches (6) im Bereich der Mündungsstelle (5) des Seitenrohres (4) zu liegen kommt,
e) die Innenfläche des Auskleidungsschlauches (6) mit Druck beaufschlagt wird, so dass der Hüllschlauch (12) mit dem darin angeordneten Auskleidungsschlauch (6) an die Innenwand des Hauptrohres (2) angepresst wird und der Seitenarm (10) des Auskleidungsschlauches (6) in das Seitenrohr eingestülpt wird und
f) das Kunstharz ausgehärtet wird,
um im Hauptrohr (2) und im Seitenrohr (4) eine Innenauskleidung auszubilden.

2. Verfahren nach Anspruch 1, **dadurch gekennzeichnet, dass** ein Auskleidungsschlauch (6) bereitgestellt wird, dessen Seitenarm (10) mit dem Hauptarm (8) über eine Sollbruchstelle (36) verbunden ist.

3. Verfahren nach Anspruch 1 oder 2, **dadurch gekennzeichnet, dass** der Hüllschlauch (12) transparent ist, so dass die Abzweigungsstelle (9) des Seitenarmes (10) des Auskleidungsschlauches (6) durch den Hüllschlauch (12) hindurch sichtbar ist.

4. Verfahren nach einem der Ansprüche 1 bis 3, **dadurch gekennzeichnet, dass** der Hüllschlauch (12) ein Polyethylenschlauch ist.

5. Verfahren nach einem der Ansprüche 1 bis 4, **dadurch gekennzeichnet, dass** der Auskleidungsschlauch (6) im Hüllschlauch (12) entlüftet wird, bevor er in das Hauptrohr (2) eingebracht wird.

6. Verfahren nach einem Ansprüche 1 bis 5, **dadurch gekennzeichnet, dass** der Hüllschlauch (12) mit dem darin angeordneten Auskleidungsschlauch (6) mittels eines Zugseiles (22) in das Hauptrohr (2) des Kanals eingebracht wird.

7. Verfahren nach einem der Ansprüche 1 bis 6, **dadurch gekennzeichnet, dass** die Positionierung des Hüllschlauches (12) mit dem darin angeordneten Auskleidungsschlauch (6) mit Hilfe mindestens einer Kamera (24) erfolgt, die in das Seitenrohr (4) eingebracht ist.

8. Verfahren nach einem der Ansprüche 1 bis 7, **dadurch gekennzeichnet, dass** die Abzweigungsstelle (9) des Seitenarmes (10) des Auskleidungsschlauches (6), beispielsweise mit Farbe, markiert wird.

9. Verfahren nach einem der Ansprüche 1 bis 8, **dadurch gekennzeichnet, dass** der Auskleidungsschlauch (6) in einen im wesentlichen die Form des Auskleidungsschlauches (6) aufweisenden Stützschlauch (13) eingebracht wird, bevor der Auskleidungsschlauch (6) durch Umstülpung des Hauptarmes in den Hüllschlauch (12) eingebracht wird, und vorzugsweise der Stützschlauch (13) an einem Ende des Hauptarmes (8) geöffnet ist und die übrigen Enden blind sind.

10. Verfahren nach Anspruch 9, **dadurch gekennzeichnet, dass** die Enden des Stützschlauches (13) über die jeweiligen Enden des Auskleidungsschlauches (6) vorstehen.

11. Hüllschlauch (12) mit einem darin angeordneten Auskleidungsschlauch (6) mit umgestülptem Hauptarm (8), wobei der Hüllschlauch (12) an der der Abzweigungsstelle (9) des Seitenarmes (10) des Auskleidungsschlauches (6) entsprechenden Stelle geschwächt oder geöffnet ist.

12. Hüllschlauch (12) mit einem darin angeordneten Auskleidungsschlauch (6) nach Anspruch 11, wobei die dem Hüllschlauch (12) abgewandte Wandfläche des Auskleidungsschlauches (6) von einem Stützschlauch (13) umgeben ist.
